# EUROPÄISCHE PATENTSCHRIFT

(11) **EP 2 497 989 B1**
(45) Veröffentlichungstag und Bekanntmachung des Hinweises auf die Patenterteilung: **11.06.2014**
(21) Anmeldenummer: 11157853.0
(22) Anmeldetag: 11.03.2011
(51) Int. Cl.: F16L 33/025, F16L 33/207

(54) **Rohrklemmanordnung**
Tube clamp assembly
Agencement de collier de serrage de tuyau

(43) Veröffentlichungstag der Anmeldung: 12.09.2012
(60) Teilanmeldung: 14163532.6
(73) Patentinhaber: Geberit International AG, 8645 Jona (CH)
(72) Erfinder: Baggenstos, Roger, 8645 Jona (CH); Stoll, Rémy, 8708 Männedorf (CH); Schneider, Thomas, 8630 Rüti (CH); Huber, René, 8645 Jona (CH)
(74) Vertreter: Frischknecht, Harry Ralph

(56) Entgegenhaltungen:
- EP-A1- 0 073 048
- DE-A1- 19 533 553
- DE-U1-202009 000 508
- GB-A- 2 326 920
- US-A1- 2006 082 156
- US-A1- 2007 134 980

## Beschreibung

### TECHNISCHES GEBIET

Die vorliegende Erfindung betrifft eine Rohrklemmanordnung nach dem Oberbegriff von Anspruch 1.

### STAND DER TECHNIK

Aus dem Stand der Technik sind Rohrklemmanordnungen mit Klemmringen bekannt.

Typischerweise umfassen Klemmringe ein Ohr, das mit einer Zange zusammenpressbar ist um den Klemmring auf einem zu verbindenden Rohrende festzuziehen. Beim Zusammenpressen des Ohrs schliesst sich ein Spalt des Klemmringes, wobei das zu verbindende Rohrende im Bereich dieses Spaltes nicht beaufschlagt wird. Die Pressung des Rohrendes ist deshalb ungleichmässig, was die Dichtigkeit der Verbindung beeinträchtigt.

Um dies zu vermeiden ist es bekannt, diesen Spalt mit einer Ohrspaltlasche zu überbrücken. Bei der Rohrklemme nach der WO 2007/101110 ist diese Ohrspaltlasche ein Abbug des Ohrs. Allerdings hat der Einsatz dieser Ohrspaltlasche in vielen Fällen dazu geführt, dass das Rohr leicht von einem kreisrunden Querschnitt zu einem elliptischen Querschnitt deformiert wurde. Dies hat sich dann im Betrieb bezüglich der Dichtigkeit der Verbindung als nachteilig herausgestellt.

Die US 2006/082156, EP 0 073 048 und die DE 195 33 553 zeigen ebenfalls Fittings der eingangs genannten Art. Diese Fittings weisen ähnliche Nachteile auf, wie die WO 2007/101110.

### DARSTELLUNG DER ERFINDUNG

Ausgehend von diesem Stand der Technik liegt der Erfindung eine Aufgabe zugrunde, eine Rohrklemme anzugeben, welche die Nachteile des Standes der Technik überwindet. Insbesondere ist es eine Aufgabe der Erfindung eine Rohrklemme anzugeben, welche im Klemmzustand keine Verformungen des Rohrs mit sich bringt bzw. diese auf ein akzeptables Minimum beschränkt.

Diese Aufgabe wird durch eine Rohrklemme nach Anspruch 1 gelöst. Die Rohrklemme, die zum Verbinden eines Rohres mit einem in ein Ende des Rohres einsteckbaren Anschlussstück dient, umfasst einen Klemmring, der entlang seines Umfanges einen ringförmigen Abschnitt und ein sich radial nach aussen erstreckendes Ohr aufweist, das von einem Werkzeug zusammenpressbar ist. Die Rohrklemme umfasst weiter ein durch den Klemmring zusammenpressbarer Spannring, welcher mit einem Spannabschnitt mindestens teilweise in den ringförmigen Abschnitt einragt, und das Rohr mit dem Spannabschnitt im wesentlichen vollständig umgibt. Der Spannabschnitt verfügt über mindestens einen Schlitz, dessen lichte Weite im zusammengepressten Zustand des Klemmrings annähernd oder ganz aufhebbar ist. Über einen derart ausgebildeten Spannabschnitt kann die Klemmkraft über den gesamten Umfang des Rohrs gleichmässig verteilt werden. Zudem wird durch die Zusammenpressung des Schlitzes verhindert, dass sich Material des Rohrs in radialer Richtung im Bereich des Spannabschnittes wegfliessen kann.

Weiter weist der Spannring einen Halterungsabschnitt auf, welcher über einen Verbindungsabschnitt mit dem Spannabschnitt in Verbindung steht, wobei der Verbindungsabschnitt derart ausgebildet ist, dass dieser während dem Vorgang des Zusammenpressens ein Abscheren des Spannabschnittes vom Halterungsabschnitt zulässt. Dadurch kann sichergestellt werden, dass der Spannabschnitt im Bereich der Krafteinleitung durch den Klemmring im wesentlichen vollständig am Rohr anliegt.

Vorzugsweise ist eine Mehrzahl von Schlitzen vorhanden, welche den Spannabschnitt in eine Mehrzahl von Spannlaschen unterteilen. Das hat den Vorteil, dass die Kraft noch gleichmässiger um den Umfang verteilt wird. Im verpressten Zustand berühren sich dann die Spannlaschen untereinander.

Der mindestens eine Schlitz erstreckt sich vorzugsweise im wesentlichen entlang der Mittelachse des Spannrings.

Alternativ erstreckt sich der mindestens eine Schlitz abschnittsweise entlang der Mittelachse des Spannrings und abschnittsweise geneigt zur Mittelachse, so dass verschränkende Kontur geschaffen wird. Der Schlitz kann sich auch mäanderförmig entlang der Mittelachse erstrecken, so dass verschränkende Kontur geschaffen wird.

Vorzugsweise verfügt die Rohrklemme über Orientierungselemente, mit welchen der Spannring zum Klemmring derart ausrichtbar ist, dass der mindestens eine Schlitz im ringförmigen Abschnitt und nicht im Bereich des Ohrs zu liegen kommt.

Vorzugsweise ist der Spannring separat vom Klemmring ausgebildet.

Bevorzugterweise wird zwischen dem Spannring und dem Anschlussstück eine Rastverbindung bereitgestellt, was die Montage der Rohrklemme erleichtert, weil durch diese Rastverbindung eine Hilfsverbindung, welche die Montage erleichtert, geschaffen wird.

Vorzugsweise umfasst die Rohrklemme weiter ein Gehäuse umfasst, in welchem der Spannring und der Klemmring angeordnet sind.

Bevorzugterweise wird zwischen dem Gehäuse und dem Anschlussstück eine Rastverbindung bereitgestellt, was die Montage der Rohrklemme erleichtert, weil diese Rastverbindung eine Hilfsverbindung, welche die Montage erleichtert, geschaffen wird.

Das Gehäuse weist eine einen Innenraum begrenzende Wandung auf, wobei der Spannring und der Klemmring im Innenraum angeordnet sind, und wobei in der Wandung eine Öffnung angeordnet ist, durch welche das Ohr von ausserhalb des Gehäuses zugänglich ist, wobei sich das Ohr insbesondere vom Innenraum über die Wandung nach aussen erstreckt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittdarstellung einer ersten Ausführungsform einer Rohrklemme durch die Mittelachse;
- Fig. 2: eine Schnittdarstellung der Rohrklemme nach Figur 1 senkrecht zur Mittelachse;
- Fig. 3: eine perspektivische Explosionsdarstellung der Rohrklemme nach Figur 1;
- Fig. 4: eine Schnittdarstellung einer zweiten Ausführungsform einer Rohrklemme durch die Mittelachse;
- Fig. 5: eine Schnittdarstellung der Rohrklemme nach Figur 4 senkrecht zur Mittelachse; und
- Fig. 6: eine perspektivische Explosionsdarstellung der Rohrklemme nach Figur 5.

### BESCHREIBUNG BEVORZUGTER AUSFÜHRUNGSFORMEN

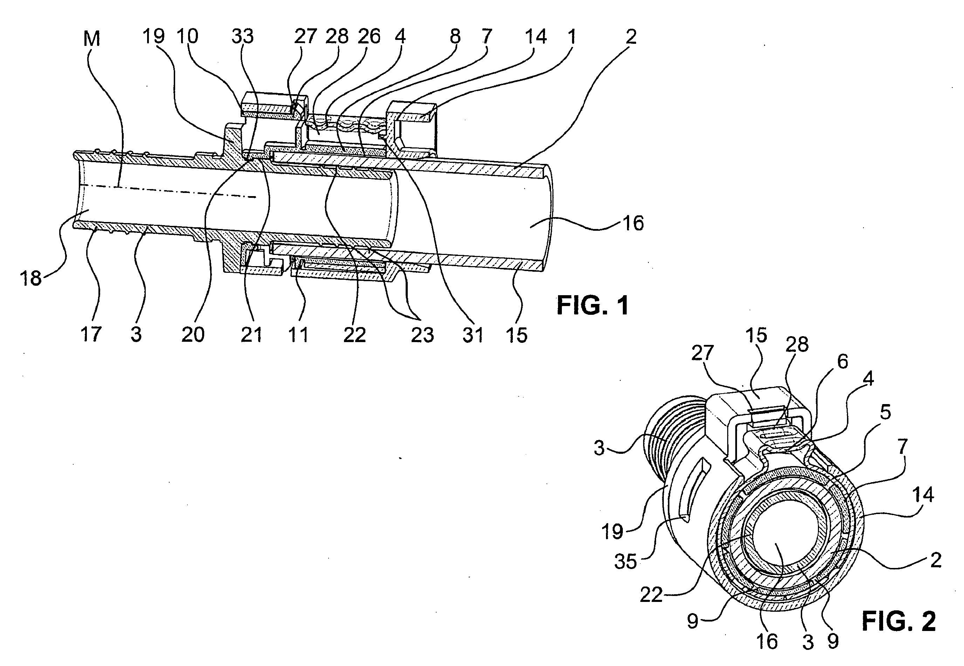

In den Figuren 1 bis 3 ist eine Rohrklemme 1 zum Verbinden eines Rohres 2 mit einem in ein Ende des Rohres 2 einsteckbaren Anschlussstück 3 gemäss einer ersten Ausführungsform gezeigt.

Das Rohr 2 ist im Wesentlichen zylindrisch ausgebildet und erstreckt sich entlang einer Mittelachse M und kann beispielsweise als Wasserleitung dienen. Das Rohr 2 begrenzt mit einer umlaufenden Seitenwand 15 einen Rohrinnenraum 16.

Das Anschlussstück 3, welches mit dem Rohr 2 verbunden werden soll, ist im Wesentlichen zylindrisch ausgebildet und erstreckt sich entlang einer Mittelachse M. Das Anschlussstück 3 begrenzt mit einer umlaufenden Seitenwand 17 einen Hohlraum 18. Das Anschlussstück 3 weist weiterhin einen Flansch 19 auf, welcher sich von der Seitenwand 17 bezüglich des Hohlraums 18 nach aussen erstreckt. Im Bereich des Flansches 19 ist zudem eine umlaufende Rille 20 und eine umlaufende Erhebung 21, welche dann von einem Lagerungsabschnitt 22 gefolgt wird, angeordnet. Mit dem Lagerungsabschnitt 22 ragt das Anschlussstück 3 in den Rohrinnenraum 16 ein. In diesem Bereich wird durch die Rohrklemme 1 auch eine entsprechende Kraft auf das Anschlussstück 3 übertragen. Der zylindrische Lagerungsabschnitt 22 kann optional umlaufende Erhebungen 23 umfassen. Mit Bezug zur Erhebung 21 am Anschlussstück 3 sei hier noch angemerkt, dass diese als Abstützelement für den Spannring 7 dienen kann, wobei ein auf das Rohr 2 wirkendes Biegemoment über diese Erhebung abstützbar ist.

Das Rohr 2 und das Anschlussstück 3 werden mit einer Rohrklemme 1 miteinander verbunden. Dabei ragt das Anschlussstück 3 mit dem Lagerungsabschnitt 22 in den Rohrinnenraum 16 ein und erstreckt sich soweit in den Rohrinnenraum 16, dass der Lagerungsabschnitt 22 in den Wirkungsbereich der Rohrklemme 1 zu liegen kommt. Die Rohrklemme 1 kann dann gemäss der untenstehenden Beschreibung geklemmt werden, und bringt dabei eine Klemmkraft auf das Rohr 2 und das Anschlussstück 3 auf, so dass das Rohr 2 zum Anschlussstück 3 geklemmt wird. Der maximale Aussendurchmesser des Lagerungsabschnittes 22 ist etwas kleiner oder gleich dem Innendurchmesser des Rohres 2 gewählt.

Die Rohrklemme 1 umfasst einen Klemmring 4 und einen durch den Klemmring 4 zusammenpressbaren Spannring 7. Die Rohrklemme 1 umgibt mit Klemmring 4 und Spannring 7 das Rohr 2.

Der Klemmring 4 weist einen sich entlang seines Umfanges erstreckenden ringförmigen Abschnitt 5 und ein sich von diesem Abschnitt 5 radial nach aussen erstreckendes Ohr 6 auf. Das Ohr 6 ist mit einem Werkzeug zusammenpressbar wobei sich der Durchmesser des ringförmigen Abschnittes 5 verringert, so dass eine Klemmkraft in radialer Richtung zur Mittelachse M auf das Rohr 2 im Bereich des Lagerungsabschnittes 22 bereitgestellt werden kann.

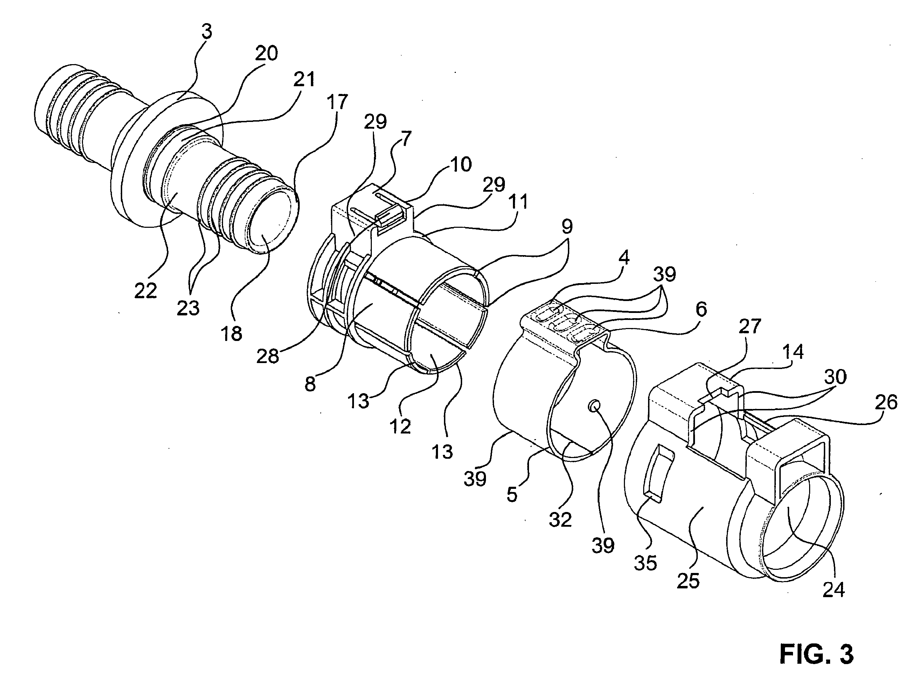

Der Spannring 7, welcher in der Figur 3 perspektivisch dargestellt ist, ragt mit einem Spannabschnitt 8 mindestens teilweise in den ringförmigen Abschnitt 5 des Klemmrings 4 ein. In der vorliegenden Ausführungsform ragt der Spannabschnitt 8 im wesentlichen vollständig in den ringförmigen Abschnitt 5 ein. Weiter kann der Spannabschnitt 8 auch durch den ringförmigen Abschnitt 5 hindurch, so dass sich der Spannring 7 bezüglich des ringförmigen Abschnittes 5 und der Mittelachse M auf beiden Seiten aus dem ringförmigen Abschnitt 5 erstreckt.

Der Spannabschnitt 8 liegt zwischen dem ringförmigen Abschnitt 5 des Klemmrings 4 und dem Rohr 2. Der Spannabschnitt 8 beziehungsweise der Spannring 7 ist mit einem Innenraum 12 dabei so ausgebildet, dass diese das Rohr 2 im Wesentlichen vollständig umgeben. Der Spannabschnitt 8 verfügt zudem über mindestens einen Schlitz 9, welcher die Wandung des Spannabschnittes von aussen zum Innenraum 12 hin durchbricht. Wenn nun der Klemmring 4 über das Ohr 6 zusammengepresst wird, wird eine Kraft vom Spannring 7 auf den Spannabschnitt 8 des Spannrings 7 übertragen. Dabei wird der Spannabschnitt 8 entsprechend gegen das Rohr 2 gedrückt, wobei die lichte Weite des Schlitzes 9 während des Vorgangs des Zusammenpressens mit zunehmender Kraft bzw. Verformung des Ohrs 6 verkleinert wird. Die lichte Weite des Schlitzes 9 ist dabei so gewählt, dass diese im zusammengepressten Zustand annähernd oder ganz aufgehoben wird. Das heisst, dass die lichte Weite des Schlitzes 9 bei Erreichen einer vorbestimmten Zusammenpresskraft annähernd oder ganz aufgehoben wird. Folglich werden die beiden Seiten des Spannabschnittes im Bereich der Schlitze 9 auf Block gefahren und der Schlitz 9 wird im zusammengepressten Zustand nahezu, insbesondere vollständig, aufgehoben. Dies hat den Vorteil, dass der Spannabschnitt 8 das Rohr 2 um dessen Umfang im Bereich der Klemmung vollständig umgibt, wodurch eine unerwünschte Verformung des Rohres vermieden wird. Zudem kann, falls das Rohr mit einer Kunststoffbeschichtung versehen ist ein Fliessen des Kunststoffes in allfällige Lücken der Rohrklemme 1, insbesondere in den Bereich des Ohrs 6, vermieden werden.

Der Spannring 7 weist weiterhin einen Halterungsabschnitt 10 auf, welcher über einen Verbindungsabschnitt 11 mit dem Spannabschnitt 8 in Verbindung steht. Dies kann gut in der Figur 3 erkannt werden. Halterungsabschnitt 10, Verbindungsabschnitt 11 und Spannabschnitt 8 sind dabei einstückig miteinander verbunden und definieren den zylindrischen Innenraum 12, welcher das Rohr 2 aufnehmen kann.

Der Verbindungsabschnitt 11 ist hier zwischen dem Halterungsabschnitt 10 und dem Spannabschnitt 8 angeordnet. Der Verbindungsabschnitt 11 ist dabei vorzugsweise so ausgebildet, dass dieser während dem Vorgang des Zusammenpressens ein Abscheren des Spannabschnittes 8 vom Halterungsabschnitt 10 zulässt. Folglich wird beim Vorgang des Zusammenpressens des Ohrs 6 der Spannabschnitt 8 vom Halterungsabschnitt 10 abgeschert und die Teile des Spannabschnittes 8 werden entlang einer radialen Bewegung zur Mittelachse M zur Seitenwand 15 des Rohrs 2 bewegt. Der Verbindungsabschnitt 11 kann auch als Sollbruchstelle oder Filmscharnier bezeichnet werden. Durch diesen Abschervorgang, also dem Bruch des Verbindungsabschnittes bzw. der Sollbruchstelle, wird sichergestellt, dass die Elemente des Spannabschnittes 8 parallel über ihre ganze Länge entlang der Mittelachse M gesehen mit der Seitenwand 15 des Rohrs 2 in Kontakt stehen. Daher wird die Klemmkraft über die ganze Auflagefläche des Spannabschnittes gleichmässig verteilt und eine elliptische Verformung des Rohrs kann ausgeschlossen werden.

Der Halterungsabschnitt 10 dient weiter der Hilfsverbindung der Rohrklemme 1 mit dem Anschlussstück 3 für die Erleichterung der Montage. Diese Hilfsverbindung wird durch ein im Bereich des Halterungsabschnittes 10 angeordneten Rastvorsprung 33 bereitgestellt, welcher in die Rille 20 des Anschlussstückes 3 einragt. Demnach kann die Rohrklemme 1 mit dem Anschlussstück 3 mit einer Rastverbindung hilfsweise verbunden werden, wobei das Rohr 2 dann in den ringförmigen Zwischenraum zwischen Rohrklemme 1 und Anschlussstück 3 einschiebbar ist.

Der mindestens eine Schlitz 9 erstreckt sich in der vorliegenden Ausführungsform entlang der Mittelachse M des Spannrings 7. Das heisst, dass der mindestens eine Schlitz 9 parallel zur Mittelachse M verläuft. In der in Figur 3 gezeigten Ausführungsform sind sechs Schlitze 9 angeordnet. Der Spannabschnitt 8 wird somit mit diesen sechs Schlitzen 9 unterteilt und man kann auch sagen, dass der Spannabschnitt 8 sechs Spannlaschen 13 umfasst, welche hier vom Verbindungsabschnitt 11 bzw. vom Halterungsabschnitt 10 abstehen. Die Schlitze 9 sind vorzugsweise in regelmässigen Abständen beabstandet zueinander angeordnet. Alternativ kann aber auch ein unterschiedlicher Abstand gewählt werden, so wie dies in der Figur 3 ansatzweise gezeigt ist. Hier ist die Spannlasche 13, die im Bereich des Ohrs 6 des Klemmrings 4 zu liegen kommt, grösser ausgebildet als die anderen Spannlaschen 13.

Alternativ kann der Schlitz 9 auch abschnittsweise parallel zur Mittelachse M des Spannrings 7 und abschnittsweise geneigt zur Mittelachse M angeordnet sein, so dass eine verschränkende Kontur des Schlitzes geschaffen wird. Zudem kann der Schlitz 9 auch mäanderförmig entlang der Mittelachse M sich erstrecken, so dass eine andere Art einer sich verschränkenden Kontur geschaffen wird.

In der Figur 3 kann ebenfalls gut erkannt werden, dass der Spannring 7 separat vom Klemmring 4 ausgebildet ist. Der Spannring 7 ragt dabei durch den ringförmigen Abschnitt 5 des Klemmrings 4 hinein.

Ebenfalls kann in der Figur 3 erkannt werden, dass ein optionales Gehäuse 14 vorgesehen werden kann. Folglich kann die Rohrklemme 1 durch Spannring 7 und Klemmring 4 oder durch Spannring 7, Klemmring 4 und Gehäuse 14 bereitgestellt werden. Das Gehäuse 14 umfasst einen Gehäuseinnenraum 24, welcher durch eine Wandung 25 begrenzt wird. In der Wandung 25 ist eine Öffnung 26 vorgesehen, durch welche das Ohr 6 hindurchragt, so dass dieses von Ausserhalb des Gehäuses 12 mit dem Werkzeug zugänglich ist.

Weiter umfasst die Öffnung 26 eine Rastkerbe 27, in welche eine Rastnase 28 des Spannrings 7 eingreifen kann. Die Rastnase 28 ist hier am Halterungsabschnitt 10 angeformt. Aufgrund der Anordnung der Rastkerbe 27 und der Rastnase 28 kann die Rohrklemme 1 mit dem Gehäuse 12, den Spannring 7 und den Klemmring 4 in vormontierter Form bereitgestellt werden. Dabei wird in einem ersten Schritt der Klemmring 4 in das Gehäuse 14 eingesetzt und dann kann der Spannring 7 nachfolgend in das Gehäuse 14 eingeschoben werden. Alternativ kann der Spannring 7 zuerst mit dem Klemmring 4 in Verbindung gebracht werden und es können dann beide Teile zusammen in das Gehäuse eingeschoben werden. Diese Vormontage im Gehäuse hat den Vorteil, dass der Installateur auf der Baustelle nur ein einziges Element handhaben muss. Bei Problemen kann er trotzdem die Rohrklemme 1 teilen und, wenn gewünscht entsprechende Modifikationen vornehmen.

Spannring 7 und Klemmring 4 werden bezüglich einer Drehung um die Mittelachse M im Gehäuse ausgerichtet. Es kann also gesagt werden, dass über das Gehäuse 2 der Klemmring 4 und der Spannring 7 zueinander ausgerichtet werden. Vorzugsweise ist die Ausrichtung dergestalt, dass im Bereich des Ohrs 6, wo der ringförmige Abschnitt 5 unterbrochen wird, eine Spannlasche 13 und nicht ein Schlitz 9 zu liegen kommt. Folglich sind die Schlitze 9 im Bereich des ringförmigen Abschnittes 5 angeordnet. Hierfür weist der Spannring 7 Orientierungsflächen 29 auf, welche an bzw. zu entsprechenden Orientierungsflächen 30 am Gehäuse ausrichtbar sind. Die Orientierungsflächen 30 erstrecken sich hier senkrecht zur Mittelachse M.

Für die Ausrichtung des Klemmrings 4 umfasst das Gehäuse 14 eine Ausrichtlasche 31, welche sich in die Öffnung 26 erstreckt. Die Ausrichtlasche 31 ist dabei so ausgebildet, dass sich diese in das Ohr 6 des Klemmrings 4 hineinerstreckt.

Alternativ kann auch der Klemmring 4 und/oder der Spannring 7 mit entsprechenden Mitteln ausgebildet sein, so dass der Klemmring 4 direkt zum Spannring 7 ausgerichtet wird. Dies ist vorteilhaft, wenn die Rohrklemme 1 ohne das Gehäuse 14 bereitgestellt wird.

In der Figur 2 kann die Abfolge der verschiedenen Teile der Rohrklemme 1, des Rohrs 2 und des Anschlussstückes 3 gut erkannt werden. Das Anschlussstück 3 ragt in den Rohrinnenraum 16 ein und wird vom Rohr 2 umgeben. Das Rohr 2 selbst wird durch den Spannring 7 umgeben und der Spannring 7 liegt im ringförmigen Abschnitt 5 des Klemmrings 4, welcher seinerseits im Gehäuseinnenraum 24 des Gehäuses 14 liegt.

Der Klemmring 4 weist zudem zwei Bohrungen 39 auf, welche den Herstellprozess des Klemmrings 4 bei dessen Verschweissung an der Schweisskante 32 vereinfachen. Weiter weist der Klemmring 4 im Bereich des Ohrs mindestens eine, hier drei, Verstärkungssicken 34 auf.

Das Gehäuse 14 weist weiter ein optionales Sichtfenster 35 auf, welches dem Installateur die Prüfung des eingeschobenen Rohrs erlaubt.

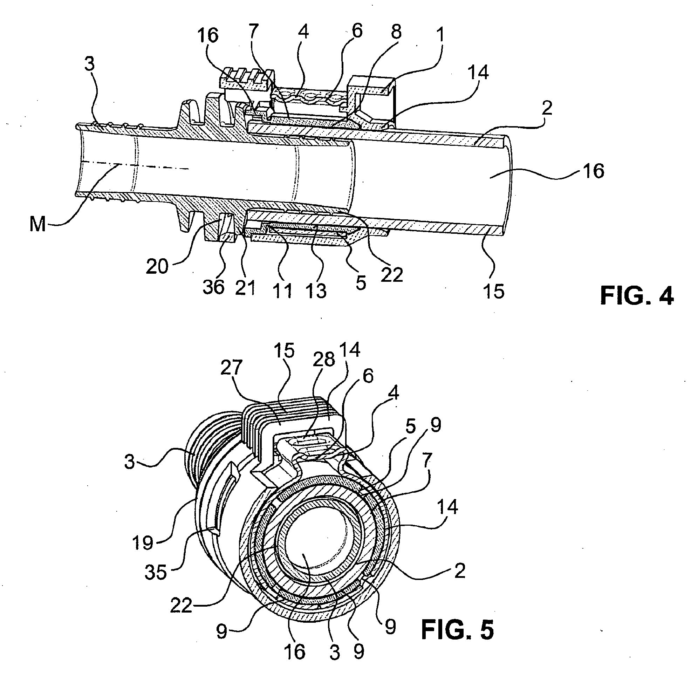

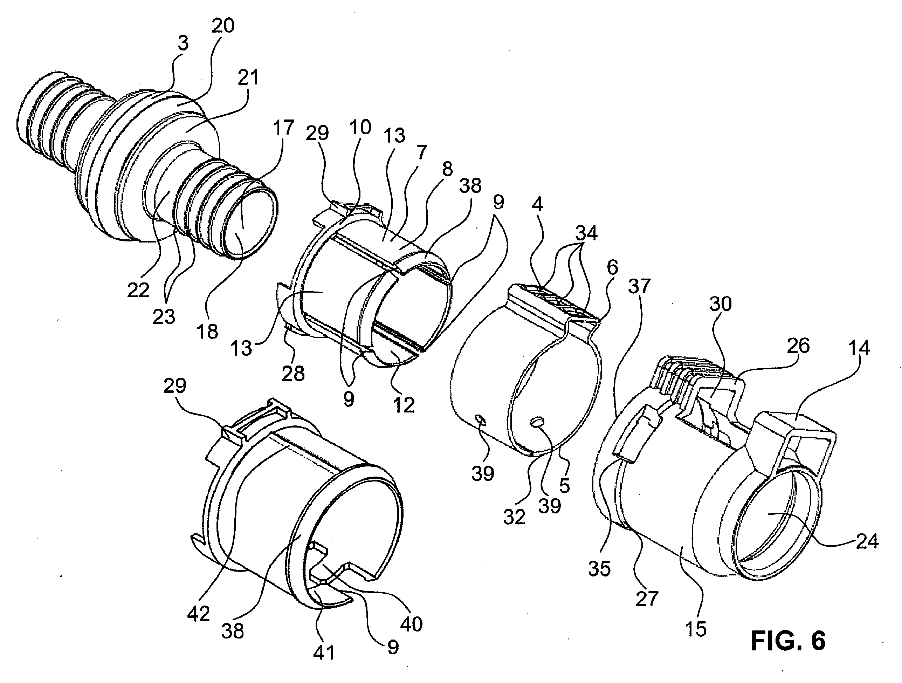

In den Figuren 4 bis 6 wird eine zweite Ausführungsform der Rohrklemme 1 gezeigt, wobei gleiche Teile mit gleichen Bezugszeichen versehen sind. In der Figur 6 werden zwei mögliche Spannringe 7 gezeigt.

Prinzipiell weist die zweite Ausführungsform die gleichen Eigenschaften wie die erste Ausführungsform auf. Unterschiedlich ist im wesentlichen die Ausbildung des Spannrings 7 und des Gehäuse 14. In der ersten Ausführungsform rastet Spannring 7 am Gehäuse 14 ein und sichert so den Klemmring 4 in seiner axialen Position im Gehäuse 14. In der zweiten Ausführungsform wird zusätzlich eine Rastverbindung zwischen Spannring 7 und Klemmring 4 bereitgestellt.

Spannring 7 umfasst im Bereich des Spannabschnittes 8 ein Anschlagselement 38. Das Anschlagselement 38 dient als Anschlag für den Klemmring 4. Folglich kann mit dem Anschlagselement 38 und dem Halterungsabschnitt 10 der Klemmring 4 am Spannring 7 bezüglich einer Bewegung in Richtung der Mittelachse M festgesetzt werden. In der vorliegenden Ausführungsform hat das Anschlagselement 38 die Gestalt einer abgeschrägten Erhebung, welche am Spannabschnitt 8 angeformt ist und sich vom Spannabschnitt 8 radial zur Mittelachse M nach aussen erstreckt. Vorzugsweise ist das Anschlagselement 38 gegenüber des Halterungsabschnittes 10 angeordnet.

Die Anordnung des Anschlagselementes 38 ist besonders dann vorteilhaft, wenn die Rohrklemme 1 ohne Gehäuse 14, also im wesentlichen aus Klemmring 4 und Spannring 7 bereitgestellt wird, weil dann Klemmring 4 und Spannring 7 bezüglich einer axialen Bewegung zueinander gesichert sind.

In der Figur 6 werden die einzelnen Elemente in einer Explosionsdarstellung gezeigt. Der Spannring 7 weist hier gegenüber der Orientierungsflächen 29 ebenfalls eine Rastnase 28 auf. Diese Rastnase 28 greift in eine entsprechend ausgebildete Rastkerbe oder Rastöffnung 27 am Gehäuse 14 ein. Über die Orientierungsfläche 29 wird der Spannring 7 im Gehäuse 14 orientiert. Weiter weist das Gehäuse 14 hier ebenfalls eine Ausrichtlasche 31 zur Ausrichtung des Klemmrings 4 im Gehäuse 14 auf. Folglich wird hier der Spannring 7 zum Klemmring 4 über entsprechende Mittel am Gehäuse ausgerichtet.

In der Figur 4 kann erkannt werden, dass das Anschlussstück 3 eine Erhebung 21 aufweist, welche im Durchmesser etwas grösser ausgebildet ist, als die Erhebung bei der ersten Ausführungsform. Hier dient die durch die Erhebung 21 geschaffene Rille 20 dann auch für die Aufnahme eines Einrastelementes 36, welches am Gehäuse 14 angeformt ist. Das Einrastelement 36 ist hier gegenüber den Orientierungsflächen 30 im Bereich der Öffnung 37 des Gehäuseinnenraums 24 angeordnet. Die Hilfsverbindung wird in der zweiten Ausführungsform zwischen Gehäuse 14 und Anschlussstück 3 bereitgestellt.

Im Bereich des Halterungsabschnittes 10 sind wiederum Orientierungsflächen 29 angeordnet, mit welchen der Spannring 7 zum Gehäuse 14 bzw. dessen Orientierungsflächen 30 ausrichtbar ist. Weiter umfasst das Gehäuse 14 hier auch eine Ausrichtlasche 31, welche in das Ohr 6 einragt, wenn der Klemmring 4 sich im Gehäuse 14 befindet, wodurch der Klemmring 4 zum Gehäuse 14 ausrichtbar ist.

In der Figur 6 werden zwei verschiedene Ausführungsformen des Spannabschnittes 8 gezeigt. Bei der ersten Ausführungsform erstrecken sich vier Schlitze 9 entlang der Mittelachse M. Bei der zweiten Ausführungsform ist ein einziger Schlitz 9 angeordnet, welcher sich abschnittsweise parallel zur Mittelachse M und abschnittsweise geneigt, insbesondere senkrecht zur Mittelachse M erstreckt. Es kann auch gesagt werden, dass der eine Schlitz 9 Laschen 40 umfasst, welche in entsprechende gegenüberliegende zur Lasche 40 angeordnete Ausnehmungen 41 eingreift. Somit weist der Schlitz 9 hier eine sich verschränkende Gestalt auf.

Weiter umfasst die zweite Ausführungsform des Spannabschnittes 8 noch ein zusätzliches Orientierungselement in der Gestalt eines von Spannabschnitt 8 abstehenden Steges 42, welcher in das Ohr 6 des Klemmringes einragen kann, so dass der Spannring 7 zum Klemmring 4 ausrichtbar ist. Der Steg dient somit als Orientierungselement zur radialen Ausrichtung des Klemmrings 4 zum Spannring 7 , so dass der Schlitz 9 im ringförmigen Abschnitt 5 und nicht im Bereich des Ohrs 6 zu liegen kommt.

### BEZUGSZEICHENLISTE

- 1: Rohrklemme
- 2: Rohr
- 3: Anschlussstück
- 4: Klemmring
- 5: ringförmiger Abschnitt
- 6: Ohr
- 7: Spannring
- 8: Spannabschnitt
- 9: Schlitz
- 10: Halterungsabschnitt
- 11: Verbindungsabschnitt
- 12: Innenraum
- 13: Spannlasche
- 14: Gehäuse
- 15: Seitenwand
- 16: Rohrinnenraum
- 17: Seitenwand
- 18: Hohlraum
- 19: Flansch
- 20: Rille
- 21: Erhebung
- 22: Lagerungsabschnitt
- 23: Erhebung
- 24: Gehäuseinnenraum
- 25: Wandung
- 26: Öffnung
- 27: Rastkerbe
- 28: Rastnase
- 29: Orientierungsfläche
- 30: Orientierungsfläche
- 31: Ausrichtlasche
- 32: Schweisskante
- 33: Rastvorsprung
- 34: Sicke
- 35: Sichtfenster
- 36: Einrastelement
- 37: Öffnung
- 38: Haltelement
- 39: Bohrung
- 40: Lasche
- 41: Ausnehmung
- 42: Steg

## Patentansprüche

1. Rohrklemme (1) zum Verbinden eines Rohres (2) mit einem in ein Ende des Rohres (2) einsteckbaren Anschlussstück (3), mit einem Klemmring (4), der entlang seines Umfanges einen ringförmigen Abschnitt (5) und ein sich radial nach aussen erstreckendes Ohr (6) aufweist, das von einem Werkzeug zusammenpressbar ist, wobei die Rohrklemme (1) weiter ein durch den Klemmring (4) zusammenpressbarer Spannring (7) umfasst, welcher mit einem Spannabschnitt (8) mindestens teilweise in den ringförmigen Abschnitt (5) einragt, und das Rohr (2) mit dem Spannabschnitt (8) im wesentlichen vollständig umgibt, wobei der Spannabschnitt (8) über mindestens einen Schlitz (9) verfügt, dessen lichte Weite im zusammengepressten Zustand des Klemmrings (4) annähernd oder ganz aufhebbar ist, **dadurch gekennzeichnet, dass** der Spannring (7) weiter einen Halterungsabschnitt (10) aufweist, welcher über einen Verbindungsabschnitt (11) mit dem Spannabschnitt (8) in Verbindung steht, wobei der Verbindungsabschnitt (11) derart ausgebildet ist, dass dieser während dem Vorgang des Zusammenpressens ein Abscheren des Spannabschnittes (8) vom Halterungsabschnitt (10) zulässt.

2. Rohrklemme nach Anspruch 1, **dadurch gekennzeichnet, dass** eine Mehrzahl von Schlitzen (9) vorhanden ist, welche den Spannabschnitt (8) in eine Mehrzahl von Spannlaschen (13) unterteilen, wobei die Schlitze (9) vorzugsweise in gleichmässigen Abständen zueinander über den Umfang des Spannabschnittes (8) verteilt sind.

3. Rohrklemme nach einem der vorhergehenden Ansprüche, **dadurch gekennzeichnet, dass** sich der mindestens eine Schlitz (9) im wesentlichen entlang der Mittelachse (M) des Spannrings (7) erstreckt.

4. Rohrklemme nach einem der Ansprüche 1 bis 2, **dadurch gekennzeichnet, dass** sich der mindestens eine Schlitz (9) abschnittsweise entlang der Mittelachse (M) des Spannrings und abschnittsweise geneigt zur Mittelachse (M) erstreckt, so dass verschränkende Kontur geschaffen wird, oder dass sich der Schlitz mäanderförmig entlang der Mittelachse (M) erstreckt, so dass verschränkende Kontur geschaffen wird.

5. Rohrklemme nach einem der vorhergehenden Ansprüche, **dadurch gekennzeichnet, dass** die Rohrklemme (1) über Orientierungselemente (29, 30, 31, 42) verfügt, mit welchen der Spannring (7) zum Klemmring (4) derart ausrichtbar ist, dass der mindestens eine Schlitz (9) im ringförmigen Abschnitt (5) und nicht im Bereich des Ohrs (6) zu liegen kommt.

6. Rohrklemme nach einem der vorhergehenden Ansprüche, **dadurch gekennzeichnet, dass** der Spannring (7) separat vom Klemmring (4) ausgebildet ist.

7. Rohrklemme nach einem der vorhergehenden Ansprüche, **dadurch gekennzeichnet, dass** zwischen dem Spannring (7) und dem Anschlussstück (3) eine Rastverbindung (20, 33) bereitgestellt ist.

8. Rohrklemme nach einem der vorhergehenden Ansprüche, **dadurch gekennzeichnet, dass** der Spannring (7) über ein Anschlagselement (10, 38) verfügt, welches den Klemmring (4) zum Spannabschnitt (8) bezüglich einer axialen Bewegung festsetzt.

9. Rohrklemme nach einem der vorhergehenden Ansprüche, **dadurch gekennzeichnet, dass** die Rohrklemme (1) weiter ein Gehäuse (14) umfasst, in welchem der Spannring (7) und der Klemmring (4) angeordnet sind.

10. Rohrklemme nach Anspruch 9, **dadurch gekennzeichnet, dass** zwischen dem Gehäuse (14) und dem Anschlussstück (3) eine Rastverbindung (20, 33) bereitgestellt wird.

11. Rohrklemme nach Anspruch 9 oder 10, **dadurch gekennzeichnet, dass** das Gehäuse (14) eine einen Innenraum (24) begrenzende Wandung (25) aufweist, wobei der Spannring (7) und der Klemmring (4) im Innenraum (24) angeordnet sind, und dass in der Wandung (25) eine Öffnung (26) angeordnet ist, durch welche das Ohr (6) von ausserhalb des Gehäuses (14) zugänglich ist, wobei sich das Ohr (6) insbesondere vom Innenraum (24) über die Wandung (25) nach aussen erstreckt.

12. Rohrklemme nach einem der Ansprüche 9 bis 11, **dadurch gekennzeichnet, dass** der Spannring (7) bezüglich der Orientierung zur Mittelachse (M) zum Gehäuse (14) ausrichtbar ist, wobei hierfür der Spannring (7) und das Gehäuse (14) vorzugsweise über Orientierungsflächen (29, 30) verfügen, und/oder dass Spannring (7) und Gehäuse (14) einen Anschlag für den Klemmring (4) bezüglich axialer Verschiebung bereitstellen.

13. Rohrklemme nach einem der Ansprüche 9 bis 11, **dadurch gekennzeichnet, dass** das der Klemmring (4) zum Gehäuse (14) ausrichtbar ist, wobei insbesondere eine Ausrichtlasche (31) am Gehäuse (14) angeformt ist und in das Ohr (6) des Klemmrings (4) einragt.

## Claims

1. Pipe clamp (1) for connecting a pipe (2) to a connection piece (3) which can be inserted into one end of the pipe (2), said pipe clamp having a clamping ring (4) which has a ring-shaped section (5) along its circumference and an ear (6) which extends radially outward and is compressible by a tool, wherein the pipe clamp (1) also includes a tensioning ring (7), which can be compressed by the clamping ring (4) and which projects at least partially into the ring-shaped section (5) by way of a tensioning section (8), and essentially completely surrounds the pipe (2) with the tensioning section (8), wherein the tensioning section (8) has at least one slot (9), the inside width of which in the compressed state of the clamping ring (4) is able to be roughly or completely removed, **characterized in that** the tensioning ring (7) also has a support section (10) which is connected to the tensioning section (8) by means of a connecting section (11), wherein the connecting section (11) is configured to shear off the tensioning section (8) from the support section (10) during the compression operation.

2. Pipe clamp according to claim 1, **characterized in that** there is present a plurality of slots (9), which divide the tensioning section (8) into a plurality of tensioning tongues (13), wherein the slots (9) are preferably distributed at regular spacings with respect to each other over the circumference of the tensioning section (8).

3. Pipe clamp according to one of the preceding claims, **characterized in that** the at least one slot (9) extends substantially along the centre axis (M) of the tensioning ring (7).

4. Pipe clamp according to one of Claims 1 to 2, **characterized in that** the at least one slot (9) extends in sections along the centre axis (M) of the tensioning ring and in sections in an inclined manner with respect to the centre axis (M) such that an interlaced contour is created, or **in that** the slot extends in a meander-shaped manner along the centre axis (M) such that an interlaced contour is created.

5. Pipe clamp according to one of the preceding claims, **characterized in that** the pipe clamp (1) has orientation elements (29, 30, 31, 42), by way of which the tensioning ring (7) is able to be aligned with respect to the clamping ring (4) in such a manner that the at least one slot (9) comes to rest in the ring-shaped section (5) and not in the region of the ear (6).

6. Pipe clamp according to one of the preceding claims, **characterized in that** the tensioning ring (7) is formed separately from the clamping ring (4).

7. Pipe clamp according to one of the preceding claims, **characterized in that** a locking connection (20, 33) is provided between the tensioning ring (7) and the connection piece (3).

8. Pipe clamp according to one of the preceding claims, **characterized in that** the tensioning ring (7) has a stop element (10, 38) which fixes the clamping ring (4) with respect to the tensioning section (8) with regard to an axial movement.

9. Pipe clamp according to one of the preceding claims, **characterized in that** the pipe clamp (1) also comprises a housing (14) in which the tensioning ring (7) and the clamping ring (4) are arranged.

10. Pipe clamp according to Claim 9, **characterized in that** a locking connection (20, 33) is provided between the housing (14) and the connection piece (3).

11. Pipe clamp according to Claim 9 or 10, **characterized in that** the housing (14) has a wall (25) which defines an interior (24), wherein the tensioning ring (7) and the clamping ring (4) are arranged in the interior (24), and **in that** an opening (26) is arranged in the wall (25), through which opening the ear (6) is accessible from outside the housing (14), wherein the ear (6) extends in particular from the interior (24) to the outside via the wall (25).

12. Pipe clamp according to one of Claims 9 to 11, **characterized in that** the tensioning ring (7) is alignable with respect to the housing (14) with regard to the orientation to the centre axis (M), wherein the tensioning ring (7) and the housing (14) preferably have orientation surfaces (29, 30) for this purpose, and/or **in that** tensioning ring (7) and housing (14) provide a stop for the clamping ring (4) with regard to axial displacement.

13. Pipe clamp according to one of Claims 9 to 11, **characterized in that** the clamping ring (4) is alignable with respect to the housing (14), wherein an alignment tongue (31), in particular, is integrally formed on the housing (14) and projects into the ear (6) of the clamping ring (4).

## Revendications

1. Collier de serrage (1) pour relier un tube (2) à une pièce de raccordement (3) pouvant être emboîtée dans une extrémité du tube (2), comprenant une bague de serrage (4) qui présente le long de sa périphérie une portion annulaire (5) et une oreille (6) s'étendant radialement vers l'extérieur, laquelle peut être comprimée par un outil, le collier de serrage (1) comportant en outre une bague de blocage (7) pouvant être comprimée par la bague de serrage (4), laquelle bague de blocage fait saillie au moins partiellement dans la portion annulaire (5) par une portion de blocage (8) et entoure essentiellement complètement le tube (2) par la portion de blocage (8), la portion de blocage (8) possédant au moins une fente (9) dont la largeur intérieure à l'état comprimé de la bague de serrage (4) peut être approximativement ou entièrement supprimée, **caractérisé en ce que** la bague de blocage (7) comprend en outre une portion de retenue (10), laquelle est en liaison avec la portion de blocage (8) par le biais d'une portion de liaison (11), la portion de liaison (11) étant réalisée de telle sorte qu'elle autorise, pendant l'opération de compression, la portion de blocage (8) à se séparer par cisaillement de la portion de retenue (10).

2. Collier de serrage selon la revendication 1, **caractérisé en ce qu'**une pluralité de fentes (9) sont prévues, lesquelles divisent la portion de blocage (8) en une pluralité de languettes de blocage (13), les fentes (9) étant de préférence réparties sur la périphérie de la portion de blocage (8) à des distances régulières les unes des autres.

3. Collier de serrage selon l'une quelconque des revendications précédentes, **caractérisé en ce que** l'au moins une fente (9) s'étend essentiellement le long de l'axe médian (M) de la bague de blocage (7).

4. Collier de serrage selon l'une quelconque des revendications 1 et 2, **caractérisé en ce que** l'au moins une fente (9) s'étend en partie le long de l'axe médian (M) de la bague de blocage et en partie de manière inclinée par rapport à l'axe médian (M), de telle sorte qu'un contour s'interpénétrant soit produit, ou **en ce que** la fente s'étant en forme de méandres le long de l'axe médian (M), de telle sorte qu'un contour s'interpénétrant soit produit.

5. Collier de serrage selon l'une quelconque des revendications précédentes, **caractérisé en ce que** le collier de serrage (1) possède des éléments d'orientation (29, 30, 31, 42) à l'aide desquels la bague de blocage (7) peut être alignée par rapport à la bague de serrage (4) de telle sorte que l'au moins une fente (9) vienne se placer dans la portion annulaire (5) et pas dans la région de l'oreille (6).

6. Collier de serrage selon l'une quelconque des revendications précédentes, **caractérisé en ce que** la bague de blocage (7) est réalisée séparément de la bague de serrage (4).

7. Collier de serrage selon l'une quelconque des revendications précédentes, **caractérisé en ce qu'**une liaison par encliquetage (20, 33) est produite entre la bague de blocage (7) et la pièce de raccordement (3).

8. Collier de serrage selon l'une quelconque des revendications précédentes, **caractérisé en ce que** la bague de blocage (7) possède un élément de butée (10, 38), lequel fixe la bague de serrage (4) par rapport à la portion de blocage (8) en termes d'un mouvement axial.

9. Collier de serrage selon l'une quelconque des revendications précédentes, **caractérisé en ce que** le collier de serrage (1) comporte en outre un boîtier (14) dans lequel sont disposées la bague de blocage (7) et la bague de serrage (4).

10. Collier de serrage selon la revendication 9, **caractérisé en ce qu'**une liaison par encliquetage (20, 33) est produite entre le boîtier (14) et la pièce de raccordement (3).

11. Collier de serrage selon la revendication 9 ou 10, **caractérisé en ce que** le boîtier (14) comprend une paroi (25) délimitant un espace intérieur (24), la bague de blocage (7) et la bague de serrage (4) étant disposées dans l'espace intérieur (24), et **en ce qu'**une ouverture (26) est située dans la paroi (25), à travers laquelle ouverture l'oreille (6) est accessible depuis l'extérieur du boîtier (14), l'oreille (6) s'étendant en particulier vers l'extérieur à partir de l'espace intérieur (24) au-delà de la paroi (25).

12. Collier de serrage selon l'une quelconque des revendications 9 à 11, **caractérisé en ce que** la bague de blocage (7) peut être alignée par rapport au boîtier (14) en termes de l'orientation par rapport à l'axe médian (M), la bague de blocage (7) et le boîtier (14) possédant à cet effet de préférence des surfaces d'orientation (29, 30), et/ou **en ce que** la bague de blocage (7) et le boîtier (14) fournissent une butée pour la bague de serrage (4) en termes de déplacement axial.

13. Collier de serrage selon l'une quelconque des revendications 9 à 11, **caractérisé en ce que** la bague de serrage (4) peut être alignée par rapport au boîtier (14), une languette d'alignement (31) étant en particulier formée sur le boîtier (14) et faisant saillie dans l'oreille (6) de la bague de serrage (4).
